# EUROPÄISCHE PATENTANMELDUNG

(11) **EP 1 783 631 A1**
(43) Veröffentlichungstag der Anmeldung: **09.05.2007**
(21) Anmeldenummer: 05024274.2
(22) Anmeldetag: 08.11.2005
(51) Int. Cl.: G06F 17/30

(54) **Suchergebnis Ranking mittels Relevance Feedback**

(71) Anmelder: Lycos Europe GmbH, 33311 Gütersloh (DE)
(72) Erfinder: Köster Oliver, 33613 Bielefeld (DE); Wagner Oliver, 33824 Werther (DE); Servatius Thomas, 33442 Herzebrock-Clarholz (DE); Dominikowski Thomas, 33332 Gütersloh (DE)
(74) Vertreter: Von Renesse, Dorothea

(57) **Zusammenfassung**

Verfahren zum Sortieren von Datensätzen in einem Kommunikationsnetzwerk, wobei die Datensätze von den Nutzem des Kommunikationsnetzwerks bewertet und anschIießend über diese Bewertung sortiert werden.
Den einzelnen Datensätze, dargestellt durch die in dem Datensystem abgeIegten Komponenten, werden daraufhin durch einen Abgleich mit einem Bewertungssystem (LGSR Calculator; 6) ausgewertet und über einen Verteiler (Distributor,7) wiederum der Datenbasis zugeführt.
Die so veränderte Datenbasis stellt nunmehr die Grundlage für eine Suchfunktion (Suchmaschine) dar, die die Nutzer durchführen können. Anhand von Suchbegriffen können die in den verschiedenen Datenbanken gespeicherten Datensätze durchsucht werden, wobei das Ergebnis als gewichtete Sortierung der Suchtreffer dargestellt werden.
Anhand des erfindungsgemäßen Verfahrens wird das Suchergebnis durch Bewertungen, die einzelne Benutzer bestimmten Datensätzen zugeordnet haben, gewichtet. Die Erfahrungen der Nutzer bezüglich der qualifizierten Datensätze: können somit auf automatisierte Weise das Suchergebnis eines weiteren Nutzers beeinflussen.

## Beschreibung

Die Erfindung betrifft ein Verfahren zum Sortieren von Daten/Datensätzen in einem Kommunikationsnetzwerk.

In einem Kommunikationsnetzwerk ist in der Regel eine Vielzahl von Daten bzw. Datensätzen gespeichert, die potentiell allen Nutzern des Netzwerks zur Verfügung stehen. Damit der Nutzer gezielt auf die für ihn relevanten Daten/Datensätze zugreifen kann, wurden Suchfunktionen (Suchmaschinen) entwickelt, die eine Auswahl (Filtern) der Datensätze anhand von Nutzer definierten Suchbegriffen erlauben. Die Auswahl der Datensätze erfolgt dabei beispielsweise durch die Überprüfung einer möglichen Übereinstimmung des Suchbegriffs mit entsprechenden Begriffen innerhalb der Datensätze.

Um die derart ausgewählten Datensätze einer Qualifizierung hinsichtlich ihrer jeweiligen Relevanz für den Nutzer zu unterziehen, können die Datensätze sortiert werden. Diese Sortierung kann beispielsweise über die Häufigkeit des Suchbegriffs in dem jeweiligen Datensatz oder aber die Stellung des Suchbegriffs in dem Datensatz (häufig ein Text) erfolgen. Wird der Suchbegriff beispielsweise in der Überschrift eines Textes verwendet, erhält dieser Text eine höherer Relevanz gegenüber einem Text, in dem der Begriff untergeordnet im Fließtext erscheint. Aus solchen Sortierfunktionen ergibt sich eine geschätzte Relevanz des identifizierten Datensatzes.

Häufig haben diejenigen, die die Datensätzen in das Kommunikationsnetz stellen (Anbieter), ein starkes Interesse daran, daß der jeweilige Datensatz innerhalb der von der Suchmaschine vorgenommenen Sortierung eine möglichst führende Position einnimmt. Um dies zu erreichen, versehen die Anbieter ihre Datensätze z.T. mit einer Vielzahl von Suchbegriffen. Die Suchmaschine wird folgerichtig einen solchen Datensatz gut platzieren und ihm somit eine vermeintlich hohe Relevanz zuordnen. Diese lediglich zu Zwecken der Verbesserung der Positionierung des Datensatz vorgenommene mehrfache Nennung des Suchbegriffs führt daher dazu, daß die scheinbare Relevanz des Datensatzes mit der tatsächlichen Relevanz des Datensatzes nicht übereinstimmt. Im Ergebnis leidet somit die inhaltliche Aussagekraft der durch die Suchmaschine vorgenommenen Sortierung.

Der vorliegenden Erfindung liegt daher die Aufgabe zugrunde, ein Verfahren zum Sortieren von Daten bzw. Datensätzen anzugeben, bei dem die Sortierung der Daten bzw. Datensätze möglichst mit der Relevanz der Daten bzw. Datensätze korrespondiert.

Diese Aufgabe wird durch den Gegenstand des Hauptanspruchs gelöst. Vorteilhafte Ausführungsformen sind Gegenstand der abhängigen Ansprüche.

Der Erfindung liegt der Gedanke zugrunde, daß die in einem Kommunikationssystem befindlichen Daten bzw. Datensätze durch die Nutzer bewertet werden und die von dem Nutzer vorgenommene Bewertung eine wesentliche Grundlage für die Sortierung der Datensätze als Ergebnis einer Suche eines Nutzers durch die Suchmaschine darstellt. Dazu ist es erforderlich, daß eine Mehrzahl von Nutzern des Kommunikationssystems miteinander verbunden ist.

Auf diese Weise ist es möglich, daß nicht nur der Verwalter eines Datensatzes das Sortierergebnis der Suchmaschine (mit)bestimmt, sondem auch jeder Nutzer des Kommunikationsnetzwerks die Sortierung der Suchergebnisse beeinflußt. Indem der Nutzer Datensätze vor allem auch anderer Nutzer bewertet, wird die Sortierung der Suchergebnisse stärker objektiviert und damit ihre Aussagekraft deutlich verbessert.

Im Sinne der Erfindung handelt es sich bei einer "Bewertung" um jede Form der Qualifizierung, Kommentierung oder Klassifizierung. Die Bewertung der Datensätze durch den Nutzer kann erfindungsgemäß auf verschiedene Weisen erfolgen, wobei diese entweder alleinig oder in einer beliebigen Kombination untereinander zur Anwendung kommen können.

So besteht erfindungsgemäß beispielsweise die Möglichkeit, daß ein Mitglied der Nutzergemeinschaft des Kommunikationsnetzwerks einzelne Datensätze einer persönlichen Bibliothek zuordnet. Sofern der Datensatz auf einer räumlich von dem jeweiligen Nutzer getrennten Datenverwaltungsvorrichtung gespeichert ist, kann diese Zuordnung auch aus einem Verweis auf den entsprechenden Datensatz bestehen.

Der Nutzer kann des weiteren erfindungsgemäß einem Datensatz bzw. einem Verweis hierzu eine aus einer vorgegebenen Auswahl selektierten oder eine beliebige Bewertung zuordnen. Die Bewertung kann erfindungsgemäß zusätzlich oder alternativ auch aus der Zuordnung von Schlagworten zu einzelnen Datensätzen bestehen. In einer bevorzugten Ausführungsform kann ein Datensatz durch die Bewertung seines Urhebers qualifiziert werden.

Das erfindungsgemäße Verfahren kann dadurch weiterentwickelt werden, daß die Nutzer des Kommunikationsnetzwerks auf die Bewertungen (z.B. auf die Schlagworte) eines jeweils anderen Nutzers zugreifen können. In diesem Fall erfolgt die Suche eines Nutzers durch die Nutzung der Bewertungen eines anderen Nutzers.

In einer vorteilhaften Ausgestaltung der vorliegenden Erfindung ist vorgesehen, daß die Bewertungen der einzelnen Nutzer zentral auf einer der Vielzahl von Datenverwaltungsvorrichtungen gespeichert werden. Diese können dann miteinander kombiniert werden, um das Suchergebnis noch weiter zu verbessern.

In einer besonders vorteilhaften Ausgestaltung der vorliegenden Erfindung ist vorgesehen, den einzelnen Mitglieder einer Nutzergemeinschaft des Kommunlkationsnetzwerks eine persönliche Bewertung zuzuordnen (z.B. ihre persönliche Sachkompetenz) und diese Bewertung mit der Bewertung des Datensatzes durch diesen Nutzer zu kombinieren. Damit ist eine deutliche Optimierung der Aussagekraft der anschließenden Sortierung der Datensätze verbunden.

Die individuelle Bewertung des Nutzers kann erfindungsgemäß auf verschiedene Arten erfolgen. Diese Bewertung kann sich dabei themenunabhängig an der Person des Nutzers orientieren oder aber sachspezifisch nach Themengebieten variieren. Beides kann auch kombiniert werden. Im ersten Fall wird dem Nutzer ein "globaler Experten-Rang" zugewiesen. Vorzugsweise wird dieser Rang aus einer vorgegebenen Anzahl von unterschiedlichen Experten-Rängen ausgewählt. Je nach zugewiesenem Rang kann dann ein von diesem Nutzer vorgenommene Bewertung eines Datensatzes per se ein stärkeres Gewicht gegenüber einer Bewertung bekommen, die von einen rangniedrigeren Nutzer vorgenommen wurde.

Im zweiten Fall erhalten die Nutzer einen themenspezifische Rang. Dieser kann je nach Schlagwort oder Sachgebiet unterschiedlich ausfallen. Auf diese Weise können die Bewertungen der einzelnen Nutzer, die erfindungsgemäß bei der Generierung des Suchergebnisses berücksichtigt werden, je nach durch Schlagworte definierten Themen unterschiedlich stark gewichtet werden. Auf diese Weise kann erreicht werden, daß Bewertungen der einzelnen Benutzer nur dann tatsächlich maßgeblich das Suchergebnis beeinflussen, wenn sich die einzelnen Benutzer als "kompetent" für das jeweilige Thema erwiesen haben.

Beide oben genannten Bewertungsverfahren der Nutzer können einzeln oder parallel eingesetzt werden. Zudem sind Kombinationen auch mit allem übrigen Bewertungsoptionen denkbar.

In einer bevorzugten Ausführungsform erfolgt die Bewertung der Nutzer durch eine Interaktion der einzelnen Mitglieder untereinander. Dies kann erfindungsgemäß beispielsweise dadurch erfolgen, daß ein erster Nutzer eine ggf. themenspezifische Frage stellt (die z.B. über Schlagworte bzw. Suchbegriffe definiert ist) und dem Kommunikationsnetzwerk übergibt und mindestens ein zweiter Nutzer eine dazu korrespondierende Antwort gibt und diese dem Netzwerk übergibt. Anhand seiner Antwort wird der antwortende Nutzer durch den fragenden Nutzer bewertet. Die Bewertung erfolgt in diesem Fall vorzugsweise themenspezifisch.

Alternativ oder zusätzlich hierzu kann die Bewertung eines Nutzers auch durch eine unmittelbare - d.h. nicht durch einen Frage/Antwort-Zirkel vermittelte - Bewertung durch andere Nutzer qualifiziert werden. Diese Qualifizierung kann "global" (siehe oben) oder themenspezifisch erfolgen. Sie kann dabei aktiv, beispielsweise durch "Empfehlung" des Nutzers durch einen anderen Nutzer, der bereits einen "Experten"-Rang aufweist, oder inaktiv verteilt werden, beispielsweise dadurch, daß, ein Nutzer die Bewertungen von Datensätzen eines anderen Nutzers dauerhaft "beobachtet" und diesem damit inaktiv einen "Experten"-Rang zuspricht.

In einer bevorzugten Ausführungsform der vorliegenden Erfindung werden die auf eine Suchanfrage ausgegebenen Datensätze zusätzlich zu der Nutzer-abhängigen ("datenquellspezifischen") Bewertung anhand von datenspezifischen Kriterien sortiert. Dies kann beispielsweise anhand der Häufigkeit des/der Suchbegriffe in den aufgefundenen Datensätzen erfolgen. Alternativ oder zusätzlich hierzu kann die Häufigkeit, mit der die sortierten Datensätze bereits aufgerufen wurden, in die Gewichtung der Suchtreffer und somit in die Sortierung eingehen.

Die Erfindung wird nachfolgend anhand von in den Zeichnungen dargestellten Ausführungsbeispielen näher erläutert.

In den Zeichnungen zeigt
- Fig. 1:: das erfindungsgemäße Verfahren in einer schematischen Übersicht und
- Fig. 2:: eine weitere Ausführungsform des erfindungsgemäßen Verfahrens in einer schematischen Übersicht.

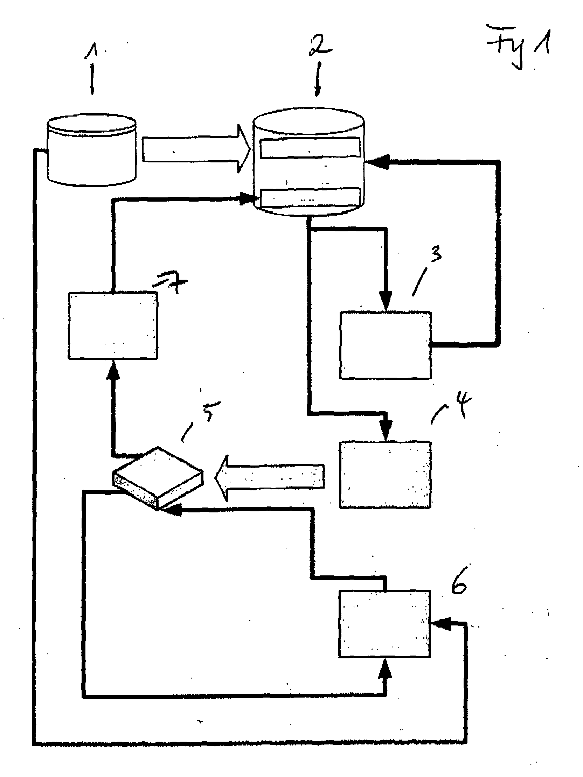

In Fig. 1 ist eine Ausführungsform des erfindungsgemäßen Verfahrens zur Sortierung von Daten in einem Kommunikationsnetzwerk in einer schematischen Übersicht dargestellt.

In einer Datenbibliothek (Knowledge Community Database; 1) sind Informationen zu einer Vielzahl von Datensätzen, die wiederum in einer Vielzahl von unterschiedlichen Datenbänken gespeichert sind, abgelegt. Diese Informationen umfassen unter anderem Bewertungen, die die Nutzer des Kommunikationsnetzwerks den Datensätzen zuordnen.

In der Bibliothek werden die einzelnen Datensätze indiziert und der sich ergebende Index in eine Datenbasis (Search Engine Database), die einen Teil einer Datenverwaltungsvorrichtung 2 darstellt, kopiert. Mittels einer ersten Scan-Vorrichtung (REP Robot; 3) werden die indizierten Datensätze daraufhin erstmals überprüft und nicht zugelassene Datensätze aus dem Index gefiltert. Aus den in dem bereinigten Index weiterhin aufgeführten Datensätzen werden anschließend mittels einer weiteren Filtervonichtung (Robot; 4) Schlagworte herausgefiltert und den einzelnen Datensätzen zugeordnet.

In einem darauf folgenden Schritt werden bestimmte Komponenten der einzelnen Datensätze, unter anderem die Adresse, unter der die Datensätze abrufbar sind, und die zugeordneten Schlagworte in einem Datensystem (XML Storage: 5) der Datenveraltungsvorrichtung abgelegt.

Den einzelnen Datensätze, dargestellt durch die in dem Datensystem abgelegten Komponenten, werden daraufhin durch einen Abgleich mit einem Bewertungssystem (LGSR Calculator; 6) ausgewertet und über einen Verteiler (Distributor; 7) wiederum der Datenbasis zugeführt.

Die so veränderte Datenbasis stellt nunmehr die Grundlage für eine Suchfunktion (Suchmaschine) dar, die die Nutzer durchführen können. Anhand von Suchbegriffen können die in den verschiedenen Datenbanken gespeicherten Datensätze durchsucht werden, wobei das Ergebnis als gewichtete Sortierung der Suchtreffer dargestellt werden.

Anhand des erfindungsgemäßen Verfahrens wird das Suchergebnis durch Bewertungen, die einzelne Benutzer bestimmten Datensätzen zugeordnet haben, gewichtet. Die Erfahrungen der Nutzer bezüglich der qualifizierten Datensätze können somit auf automatisierte Weise das Suchergebnis eines weiteren Nutzers beeinflussen.

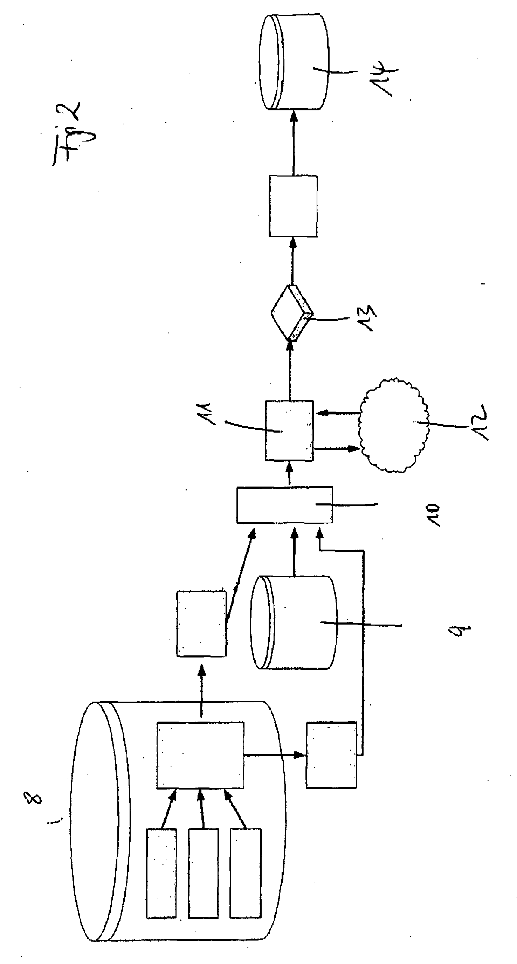

In Fig. 2 ist eine alternative Ausführungsform des erfindungsgemäßen Verfahrens dargestellt, das auf eine zusätzliche, durch Interaktion der Benutzer des Kommunikationsnetzwerks erzeugte Bewertung der Nutzer zurückgreift.

Durch die Interaktion einer Mehrzahl von Nutzern des Kommunikationsnetzwerks werden mittels verschiedener Bewertungsverfahren (Fragen und Antwort (Q & A); Expert Network; Social Bookmarking), beispielsweise über den direkten Informationsaustausch, Bewertungen einzelner Nutzer erzeugt, denen daraufhin "Experten"-Ränge zugesprochen werden. Jeder bewertete Benutzer (Expert) erhält dabei einen globalen "Experten"-Rang und/oder einen oder mehrere themenspezifische "Experten"-Ränge. In der Fig. 2 ist die Nutzergemeinschaft mit der Ziffer 8 dargestellt.

In einer Datenverwaltungsvorrichtung 10, werden die Bewertungen der Nutzer sowie deren Bewertungen der abrufbaren Datensätze, die in einer speziellen Datenbank (Link Library; 9) gespeichert sind, zusammengeführt.

Mittels einer Scan-Vorrichtung (Robot; 11) werden die in den einzelnen Datenbanken, hier dargestellt als eine Datenbankeinheit 12 (Intemet), gespeicherten Datensätze durchsucht und mittels aus dem Stand der Technik bekannter Verfahren Schlagworte herausgefiltert, die einen Hinweis auf den Inhalt des jeweiligen Datensatzes liefern.

Diese Informationen sowie bestimmte Komponenten der einzelnen Datensätze, unter anderem die Adresse, unter der die Datensätze erreichbar sind, werden in einem Datensystem (XML Storage; 13) der Datenverwaltungsvorrichtung abgelegt.

Mittels einer Suchfunktion können die Nutzer des Kommunikationsnetzwerks auf die in dem Datensystem der Datenverwaltungsvorrichtung gespeicherten Informationen zugreifen, die entsprechend einer Suchanfrage eines Nutzers in dessen Ausgabevorrichtung in Form eines gewichteten Suchergebnisses (Search engine Index: 14) ausgegeben werden.

## Patentansprüche

1. Verfahren zum Sortieren von Datensätzen in einem Kommunikationsnetzwerk, **dadurch gekennzeichnet, daß** die Datensätze von den Nutzern des Kommunikationsnetzwerks bewertet und diese Bewertung anschließend in die Sortierung der Datensätze in der Ausgabeeinheit des Kommunikationsnetzwerkes einfließt.

2. Verfahren gemäß Anspruch 1, **dadurch gekennzeichnet, daß** mindestens ein Nutzer die Datensätze einer persönlichen Bibliothek zuordnet.

3. Verfahren gemäß Anspruch 1 oder 2, **dadurch gekennzeichnet, daß** mindestens ein Nutzer den Datensätzen mindestens ein Schlagwort zuordnet.

4. Verfahren gemäß Anspruch 2 oder 3, **dadurch gekennzeichnet, daß** die persönliche Bibliothek oder die zugeordneten Schlagwörter auf der oder den Datenverwaltungsvorrichtungen gespeichert werden.

5. Verfahren gemäß einem der vorhergehenden Ansprüche, **dadurch gekennzeichnet, daß** die Nutzer Bewertungen erhalten und diese Bewertungen die Sortierung der Datensätze beeinflussen.

6. Verfahren gemäß Anspruch 5, **dadurch gekennzeichnet, daß** die Nutzer global oder spezifisch für einzelne Suchbegriffe bewertet werden.

7. Verfahren gemäß Anspruch 5 oder 6, **dadurch gekennzeichnet, daß** die Bewertung der Nutzer durch eine Interaktion der einzelnen Nutzer untereinander erfolgt.

8. Verfahren gemäß einem der vorhergehenden Ansprüche, **dadurch gekennzeichnet, daß** die Datensätze zusätzlich anhand von datenspezifischen Kriterien sortiert werden.

9. Verfahren gemäß Anspruch 9, **dadurch gekennzeichnet, daß** die Datensätze zusätzlich anhand der Häufigkeit des Suchbegriffes in den einzelnen Daten- bzw. Informationssätzen sortiert werden.

10. Verfahren gemäß Anspruch 9 oder 10, **dadurch gekennzeichnet, daß** die Datensätze anhand der Häufigkeit, mit der sie jeweils in dem Kommunikationsnetz aufgerufen werden, sortiert werden.
